# EUROPEAN PATENT SPECIFICATION

(11) **EP 3 590 075 B1**
(45) Date of publication and mention of the grant of the patent: **03.12.2025**
(21) Application number: 18730099.1
(22) Date of filing: 05.03.2018
(51) Int. Cl.: G06K 19/077, G06K 19/07

(54) **CHIP CARD AND METHOD FOR FABRICATING A CHIP CARD**
CHIPKARTE UND VERFAHREN ZUR HERSTELLUNG EINER CHIPKARTE
CARTE À PUCE ET PROCÉDÉ DE FABRICATION D'UNE CARTE À PUCE

(30) Priority: 03.03.2017 FR 1751760
(43) Date of publication of application: 08.01.2020
(73) Proprietor: Linxens Holding, 78200 Mantes-la-Jolie (FR)
(72) Inventor: YEAP, Yean Wei, 78200 Mantes La Jolie (FR); MATHIEU, Christophe, 78200 Mantes La Jolie (FR); NIELAND, Carsten, 99867 Gotha (DE); DÖRING, Sven, 01157 Dresden (DE)
(74) Representative: INNOV-GROUP
(86) International application number: PCT/IB2018/000511
(87) International publication number: WO 2018/158644

(56) References cited:
- EP-A1- 1 411 466
- WO-A1-2004/034320
- DE-A1- 19 941 637
- DE-U1- 20 110 585
- FR-A1- 3 025 634
- US-A1- 2011 121 081
- US-A1- 2012 273 577
- US-A1- 2013 140 370

## Description

The invention relates to the field of chip cards. Chip cards are well known to the public, who have multiple uses therefor: payment cards, SIM cards for mobile phones, transport cards, identity cards, etc.

The chip cards comprise transmission means for transmitting data from an electronic chip (integrated circuit) to a card reader device (reading), or from this device to the card (writing). These transmission means can be "with contact", "contactless" or else dual-interface, when they combine the above two means.

The chip cards generally consist of a rigid card body made of plastic material of PVC, PVC/ABS, PET or polycarbonate type forming most of the card, in which an electronic module is incorporated. The electronic module generally comprises a flexible printed circuit provided with an electronic chip and contact lands electrically connected to bonding pads of the chip. The contact lands sit flush on the electronic module, on the surface of the card body, for a connection by electrical contact with a card reader device. The dual-interface chip cards further comprise at least one antenna for transmitting data between the chip and a radiofrequency system allowing data to be read or written, contactlessly.

In the dual-interface cards, the electronic module comprising contacts and the chip, on the one hand, and the antenna possibly incorporated in an inlay, on the other hand, are generally fabricated separately. Then, the antenna and its possible inlay are laminated with at least one other sheet of plastic material, to form the body of the card. A cavity is then milled in the body of the card and the module is housed in this cavity and connected to the antenna.

FR 3 025 634 A1 discloses a chip card according to the preamble of claim 14.

In order to add other functions to the chip cards, there is proposed a method for fabricating a chip cards, according to claim 1.

According to this method, at least one second cavity is also produced in the thickness of the card body, for example by milling after lamination or by cutting out from one of the sheets before lamination, to place at least one second module comprising an electronic component therein, and to connect this second module to the conductive circuit intended to be connected to the first module or to another conductive circuit.

Thus, by virtue of the invention, it is possible to add at least one other functional module to a chip card. This additional module can be connected to a conductive circuit laminated in the card body before or after lamination. In all cases, one surface of the modules is flush with the surface of the card, for example to establish an electrical contact, or to allow an interaction with a user (for a detection of fingerprints, to display an item of information, to exert a pressure on a pushbutton, etc.), or for any other function which requires a module part not to be embedded in the card body.

One of the difficulties encountered for fabricating such chip cards is linked to the positioning of the connections between the modules and the conductive circuits, both along their thickness and in a plane parallel to their main surfaces. Using bonding pads precisely positioned one relatively to one another on a flexible substrate helps coping with such difficulties.

A module is, for example, a substrate, composed of a layer of flexible dielectric material, supporting at least one electronic component. A module can also be an electronic component, such as a sensor of biometric characteristics or a display device, or a pushbutton, etc. A module can also comprise an electrical energy power supply device, electrically connected to the electronic component. This electrical energy power supply device can be a battery - possibly rechargeable by photovoltaic effect - or a capacitor discharging, on demand, its electrical charge, stored by virtue of an electromagnetic coupling between an antenna linked to this capacitor (called "supercapacitor") and the antenna of a contactless reader. In other cases, the module does not have its own power supply system and it is the reader with contacts which supplies the energy required for the operation of the components upon the introduction of the card into this reader.

The method according to the invention possibly comprises one or other of the features mentioned in claims 2 to 13, considered alone or in combination with one or more other features.

According to another aspect, the invention relates to a chip card according to claim 14.

The chip card according to the invention possibly comprises one or other of the features mentioned in claims 15 to 17, considered alone or in combination with one or more other features:

Other features and advantages of the invention will become apparent on reading the following detailed description, and in the attached drawings. In these drawings:
- Figure 1 schematically represents, in perspective, an embodiment of a chip card according to the invention;
- Figure 2 schematically represents, in perspective and in an exploded view, the embodiment of the chip card represented in Figure 1;
- Figure 3 schematically represents, in cross section, the embodiment of the chip card represented in Figures 1 and 2;
- Figure 4 is a representation similar to Figure 3, of a second exemplary embodiment of a chip card according to the invention;
- Figure 5 is a representation similar to Figures 3 and 4, of a third exemplary embodiment of a chip card according to the invention;
- Figure 6 is a representation similar to Figures 3 to 5, of a fourth exemplary embodiment of a chip card according to the invention;
- Figure 7 represents, seen from above, an interconnection conductive circuit forming part of an intermediate sheet intended to be inserted into the body of a chip card according to the embodiment of Figure 6;
- Figure 8 represents, seen from below, the conductive circuit of Figure 7;
- Figures 9 and 10 represent, in an exploded view, respectively seen from above and seen from below, a set of sheets forming the chip card according to the embodiment of Figure 6;
- Figure 11 is a representation similar to Figure 6, of a fifth exemplary embodiment of a chip card according to the invention;
- Figure 12 is a schematic representation of a method for fabricating a chip card according to the invention.

In this document, the terms "front", "rear", "above", "below", "upper", lower", etc. are purely conventional and, as appropriate, refer to the orientations as represented in the figures.

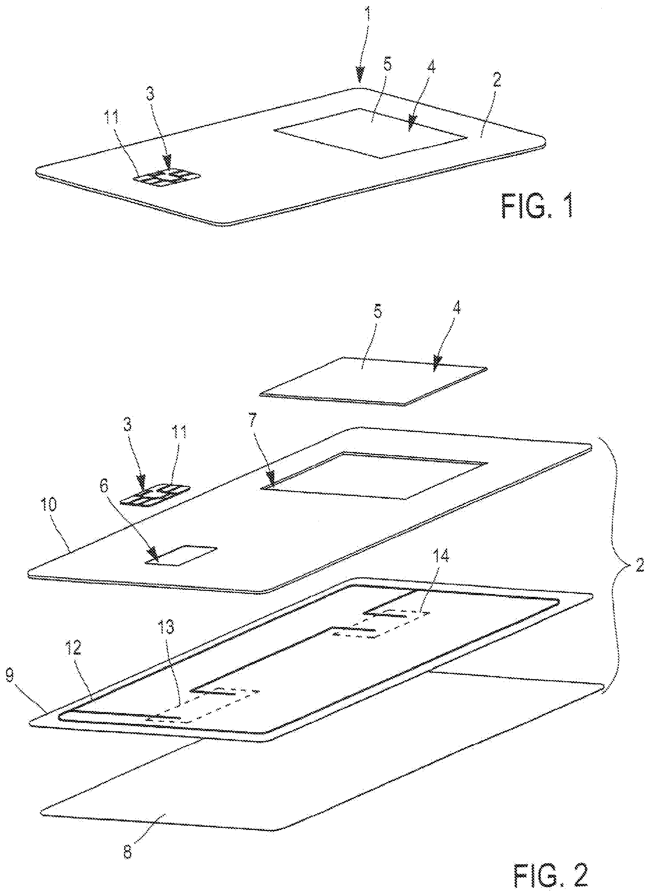

Figures 1 and 2 show a first exemplary embodiment of a chip card 1 according to the invention. This chip card 1 comprises a card body 2, a first module 3 and a second module 4. One can notice that one or several layer(s) or sheet(s) can be laminated, in addition to those represented, above and/or below its main faces.

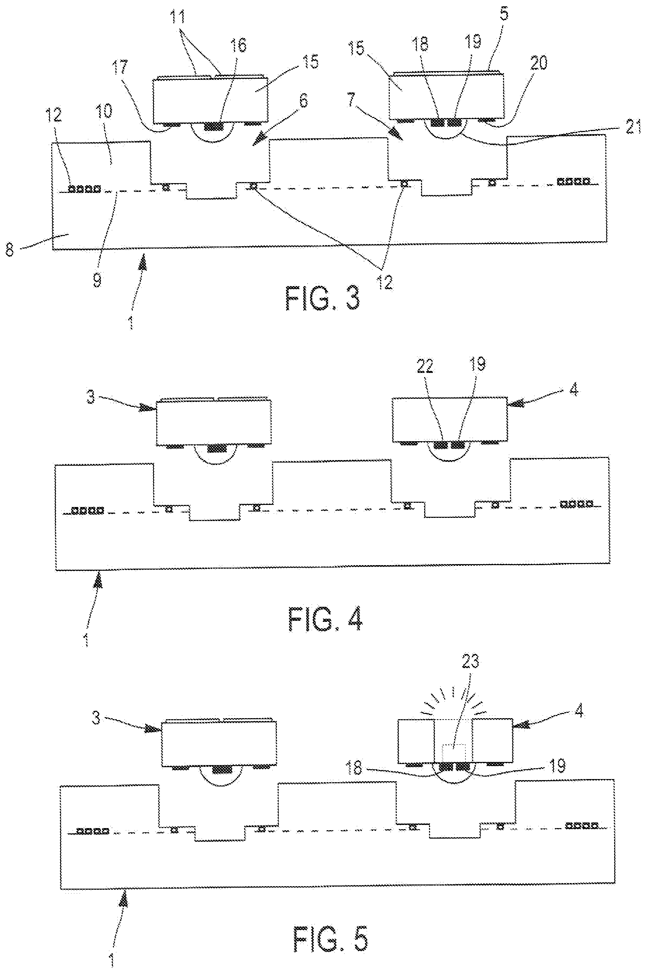

The first module 3 is for example of bank type and corresponds to the ISO 7816 standard. The second module 4 comprises, for example, a sensor of biometric characteristics 5 (see also Figure 3), of fingerprints in the present case. The sensor of biometric characteristics 5 is for example marketed by Fingerprints cards AB^{®}, NEXT Biometrics^{®} or IDEX^{®}.

The first 3 and second 4 modules are housed in cavities 6, 7 produced in the card body 2 (see Figure 2). One and/or the other of these cavities 6, 7 can be milled from one of the main faces of the card body 2 after the latter has been produced by lamination of several sheets 8, 9, 10 of plastic material (Figure 3). Alternatively, one and/or the other of these cavities 6, 7 is/are cut out from a sheet 10 of plastic material before the latter is laminated with other sheets 8, 9 of plastic material to form the card body 2 (see Figure 2).

The card represented in Figure 2 is of dual-interface type. The electronic chip of the first module 3 is connected both to the contacts 11 flush with the surface of the card 1 (see Figure 1) and to an internal wiring which, in this embodiment, corresponds to an antenna 12 (see Figure 2). It can operate in "contact" or "contactless" mode. It comprises at least one bottom sheet 8, one intermediate sheet 9 forming an antenna inlay, and one top sheet 10. Each of these three sheets 8, 9, 10 can possibly be composed of several sublayers (for example, the bottom 8 and top 10 sheets can comprise a finishing layer, a printing layer, etc.).

The bottom 8 and top 10 sheets are, for example, composed of one or more layers of PVC. The intermediate sheet 9 is generally itself, as is known, composed of one or more layers on, or between, which there is incorporated an antenna 12 which is wired or etched in a metallic sheet. The one or more different constituent layers of the intermediate sheet 9 are for example also produced in PVC.

The antenna 12 for example comprises a conductive line wound over several loops or turns extending at the periphery of the card 1.

In the example represented in Figure 2, the turns of the antenna 12 are interrupted over two connection zones 13, 14: a first connection zone 13 situated at the level of the first cavity 6, to connect the first module 3 to the antenna 12, and a second connection zone 14 situated at the level of the second cavity 7 to connect the second module 4 to the antenna 12. The connection between the conductive line of the antenna 12 and the first 3 and second 4 modules is produced, for example, using drops of solder, conductive paste, an anisotropic conductive film, or any other appropriate material.

Therefore, in this example, the conductive line of the antenna 12 is used both as conductive circuit for wiring, or for interconnection, to connect the first 3 and second 4 modules to one another and equally to ensure the antenna function required for the use of the card in "contactless" mode.

The opening or the closing of the conductive circuit composed of the conductive line of the antenna 12 is controlled by the second module 4. More specifically, the closing of this interconnection circuit can be performed only if the fingerprint of a holder authorized to use the card 1 is recognized by the biometric sensor 5 supported by the second module 4.

In Figure 3, the body of the card 2 is represented after lamination of the bottom 8 and top 10 sheets, sandwiching the intermediate sheet 9. This card body 2 comprises the two cavities 6, 7 for example produced by milling in order to expose the first 13 and second 14 connection zones of the antenna.

In this figure, the first 3 and second 4 modules are positioned respectively above the first 6 and second 7 cavities, in which they will be housed. The first 3 and second 4 modules comprise, for example, an inlay 15 composed of a flexible dielectric material (epoxy glass). On the front face of this inlay 15, the first module 3 comprises contacts 11 etched in a conductive layer (possibly with various coatings of this conductive layer in order to protect it from corrosion, reduce its contact resistance, improve the visual appearance thereof, etc.). The contacts 11 are linked electrically to an electronic chip 16 (for example of bank type compatible with the EMV interoperability standard) and to bonding pads 17 produced for example by etching a conductive layer deposited on the rear face of the inlay 15. The electrical link between the contacts 11 and the electronic chip 16, on the one hand, and the bonding pads 17, on the other hand, can be produced, as is known, using metallized holes, conductive wires - "wire bonding" -, or using any other appropriate technique. The electronic chip 16 and any conductive wires thereof are protected by encapsulation.

As for the second module 4, it comprises, on the front face of its inlay 15, a biometric sensor 5. The electrical link between the biometric sensor 5 and the conductive circuit 12 can be produced according to one of the methods mentioned in relation to the description of the connection of the first module 3 to the conductive circuit 12. The electrical circuit situated on the rear face of the inlay of the second module comprises a controller 18 and a battery 19 which can be protected by encapsulation (which is the technique represented in Figures 3 and 4, but which is not necessarily the most widely used to protect this type of component) or overmoulding (for example using the so-called chip scale packaging, or SCP technique, or System In Package, i.e SIP technology), as well as bonding pads 20 situated outside of the encapsulated or overmoulded zone 21. The battery 19 is for example a micro-battery of supercapacitor type marketed by I-Ten^{®}.

The connection between the antenna 12 and the bonding pads 17, 20 situated on the rear face of the first 3 and second 4 modules, can be made using one of the known connection types: solder connection, using a brazing paste or a conductive paste, or any other appropriate material. Alternatively, this connection can be made using connection units such as those described in the patent application filed under the number FR1652762, which inter alia discloses a connection unit having a flexible film with a conductive layer on at least one of its main faces.

The antenna 12, or other antenna dedicated to this function, and/or the contacts 11 can be used to recharge the battery 19 (respectively by induction or direct contact).

Thus, to fabricate such a card 1, it is possible to produce, on the one hand, the card body 2, by possibly implementing lamination steps, and, on the other hand, a functional module 4, possibly independent and comprising an energy power supply device 19. However, since the functional module 4 can be placed in a cavity formed in the body of the card 2 after the latter has been produced, the functional module does not risk being degraded during the lamination steps.

More particularly, with such a card 1, it is possible to separate the steps and the elements of its fabrication which come under the production of the body of the card and which exhibit risks for certain functional components (and in particular for the battery 19) and the steps and the elements of its fabrication which came under the production of the module or modules comprising the functional components to be protected. Thus, for example, a conductive circuit or an antenna can be laminated with the other constituent sheets of the card body 2, whereas the functional module or modules are connected to the conductive circuit or to the antenna when they are placed in their respective cavities produced in the card body 2.

Many variants can be envisaged to the embodiment described in relation to Figures 1 to 3. The first 3 and second 4 modules have been described above as double-sided circuits. Alternatively, they can be produced using single-sided circuits, or even one produced single-sided and the other double-sided.

Similarly, the second module 4 can comprise other functions in place of, or in addition to, the biometric measurement function mentioned above.

Figure 4 represents a card 1 comprising a first module 3 similar to that described in relation to the first embodiment, and a second module 4 incorporating a so-called "BLE" chip 22, BLE being the acronym for "Bluetooth Low Energy". Other possible active or passive components, necessary to the operation thereof, can be incorporated in the second module 4, in addition to the battery 19. The "BLE" chip is, for example, marketed by Cypress^{®}.

Figure 5 represents a card also comprising a first module 3 similar to that described in relation to the first embodiment and a second module 4 incorporating a light-emitting diode 23, for example intended to indicate the state of the bank transaction performed using the first module 3. Here again, the energy provided to the light-emitting diode is supplied by a battery 19 situated on the second module 4. Alternatively, or in addition, a controller 18 can be used to trigger or not trigger the switching on of the light-emitting diode 19 when the antenna 12 picks up energy from an electromagnetic field suitable for the performance of a (bank) transaction at the level of the first module 3.

The second module 4, or even another module similar in its structure to the latter, can comprise a display device compatible, for example, with a "dynamic code verification" function ("dynamic CVV") incorporated in the same module, or in another, as well as a battery 19, in particular for powering the display device. The display device is, for example, a device comprising an "electronic paper", called "ePaper", marketed by E-Ink^{®}.

Other devices can be incorporated in the card, in addition to or in place of one or other of the devices already mentioned, either within a module such as the second module 4, or else in another module similar in its structure thereto: passive components, pushbutton (for example marketed by Nicomatic^{®}), etc.

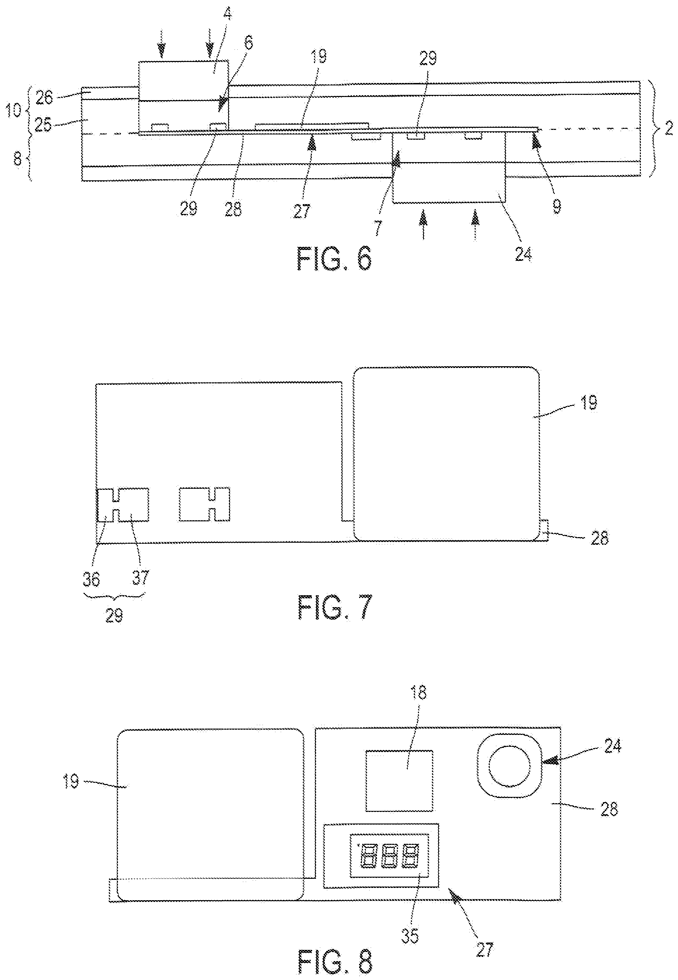

Thus, a fourth embodiment of the chip card according to the invention with a pushbutton is represented in relation to Figures 6 to 10.

According to this embodiment, the chip card 1 comprises a card body 2, a first module 3, a second module 4 and a third module 24. Figure 6 corresponds to a cross section passing through the second 4 and third 24 modules. Thus, the first module 4 does not appear, but in a cross section passing through this first module 4, the latter would be represented schematically in a way similar to the second module 4, for example. As for the preceding embodiments, the first module 3 is, for example, of bank type and corresponds to the ISO 7816 standard. The second module 4 corresponds, for example, to a display device 35. The third module 24 corresponds, for example, to a pushbutton.

The chip card 1 also comprises a bottom sheet 8, an intermediate sheet 9 and a top sheet 10, laminated together. The bottom 8 and top 10 sheets each comprise, respectively, an inner layer 25 and a finishing layer 26. Cavities 6, 7 are formed in the bottom sheet 8, in the top sheet 10 or in both. The intermediate sheet 9 comprises an interconnection conductive circuit 27. The conductive circuit 27 comprises, for example, a flexible substrate 28 on which electrically conductive tracks are produced, for example by etching a layer of conductive material laminated on the flexible substrate 28. The flexible substrate 28 is, for example, composed of a polyimide. The flexible substrate 28 supports several components such as a battery 19 (Figure 7) and a microcontroller 18 (Figure 8) interconnected electrically by these conductive tracks. For example, the flexible substrate 28 comprises, on one face (Figure 7), bonding pads 29 for connecting an antenna and the first module 3, and bonding pads for connecting a battery 19, and on the other face (Figure 8) tracks and bonding pads for interconnecting a display device 35, a pushbutton 24 and a microcontroller 18. For the sake of clarity, and for showing the bonding pads 29, the first module 3 is not represented on figure 7.

The bonding pads 29 can be such as those produced on the connection units already mentioned above and described in the patent application filed under the number FR1652762. For example, the bonding pads 29 are produced on the flexible substrate 28 in the same way and at the same time as the conductive tracks. By contrast, the bonding pads 29 are not necessarily in electrical continuity with the conductive tracks. For example, bonding pads 29 can be used to establish an electrical connection between an antenna and the first module 3, whereas other bonding pads can be used to establish an electrical connection between the conductive circuit 27 and the second 4 and third 24 modules, without the antenna being connected to the conductive circuit 27. As represented in Figure 7, two bonding pads 29 intended for connecting the first module 3 each comprise, respectively, two portions 36, 37 electrically linked to one another. The outer portions 36 are intended for a connection with the free ends of an antenna 12. The inner portions 37 are intended for a connection with the first module 3.

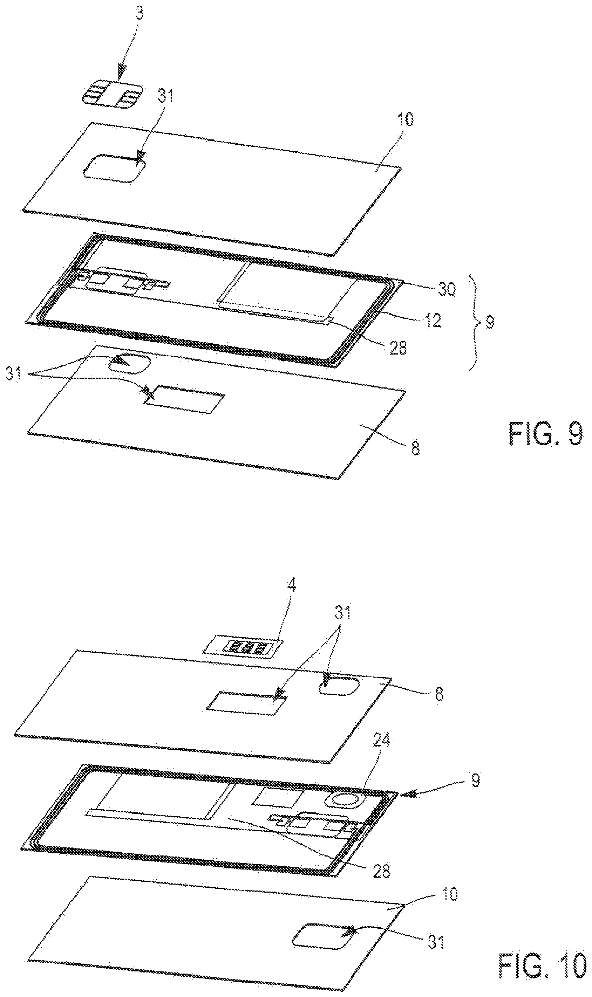

The antenna 12 is described in relation to Figure 9. The antenna 12 is composed of a conductive wire wound in the form of a coil, or of a conductive track, with several turns and terminating by two free ends. The antenna 12 is supported by a substrate 30. This substrate 30 is for example composed of PVC or of polycarbonate. The antenna 12 may have been produced directly on the substrate 30 (for example by etching in a layer of conductive material laminated on the substrate 30 or by embedding a wire in the substrate 30 - by the so-called "wire embedding" technology). Alternatively, the antenna 12 is formed on an inlay before transferred (without this inlay) onto the substrate 30.

The substrate 30 of the antenna 12 and the antenna 12, on the one hand, and the flexible substrate 28, are transferred one onto the other. The detail of this operation is not represented. Only the result thereof is visible in Figure 9. Possibly, the flexible substrate 28 and/or the substrate 30 of the antenna 12 comprise cutouts at the location of certain components like the battery 19, the microcontroller 18, etc. in order to compensate for an overthickness that the latter could create in the card and/or limit stresses which could be generated on the latter during the lamination of the constituent layers of the card body 2. Possibly, compensation layers, with or without cutouts, can be added to the bottom 8, intermediate 9 and top 10 sheets for the same reasons.

Upon the assembly of the substrate 30 and of the flexible substrate 28 onto one another, the outer portions 36 of each bonding pad 29 are each linked electrically, respectively, to an end of the antenna 12.

The assembly comprising the flexible substrate 28 and its components as well as the substrate 30 and its antenna 12 forms the intermediate sheet 9.

The intermediate sheet 9 is laminated between the bottom 8 and top 10 sheets. The set of the bottom 8, top 10 and intermediate 9 sheets is represented in Figures 9 and 10 in exploded fashion. In Figures 9 and 10, the bottom 8 and top 10 sheets are represented with cutouts 31 produced before lamination of the bottom 8, top 10 and intermediate 9 sheets. These cutouts 31 are used to receive the first 3, second 4 and third 24 modules. One or more of these cutouts 31, even all thereof, are produced in the bottom 8 or top 10 sheets, before lamination of the bottom 8, top 10 and intermediate 9 sheets. In this way, one or more of the modules 3, 4, 24, even all thereof, are each placed and fixed respectively in a cavity formed by a cutout 31, before or after lamination of the bottom 8, top 10 and intermediate 9 sheets. For example, in Figures 9 and 10, the first module 3 (with the contacts for a connection with a chip card reader) and the second module 4 (with the display device), are housed in the cavities 6, 7 formed by the cutouts, after lamination of the bottom 8, top 10 and intermediate 9 sheets, whereas the third module 24 is fixed and connected to the conductive circuit 28 before lamination. Alternatively, the bottom 8, top 10 and intermediate 9 sheets are laminated together, with or without a prior cutout 31 and the cavities 6, 7 necessary for the reception of one or more modules 3, 4 are formed by milling in the bottom 8 and/or top 10 sheets. It is therefore possible, for one and the same chip card, possibly to produce one or more cavities by prior cutting out to receive one or more modules and produce one or more other cavities by milling after lamination, to receive one or more other modules.

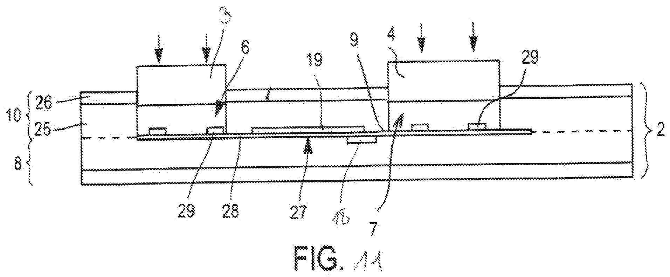

A fifth exemplary embodiment of a chip card 1 is shown on Figure 11. The chip card 1 is not fully completed (the first 3 and second 4 modules are not fully inserted in the card body 2 and connected to one another). According to this embodiment, the first module 3 is a module for payment (e.g. for example of bank type, corresponding to the ISO 7816 / EMV standard) and the second module 4 is a fingerprint sensor. The first 3 and second 4 modules are placed in their respective cavity 6 or 7 after the card lamination and the cavity milling. A first conductive circuit comprises an inlay 9 supporting an internal wiring possibly comprising an antenna (not shown). The internal wiring is made for instance by wire embedding (but it could be conductive tracks etched or stamped in a conductive layer). A second conductive circuit 27 comprises bonding pads 29 (similar to the ones already described above). On Figure 11, the first and second conductive circuits are represented, after lamination, as a single element. A micro-battery 19 and a microcontroller 18 are also directly connected the second conductive circuit 27. The first and second 27 conductive circuits are laminated with inner layers 25 and finishing layers 26 forming the card body 2. The internal wiring is connected to a first portion 36 of the bonding pads 29, for example by TC bonding (i.e. Thermo-Compression bonding). Other techniques can be used for connecting the internal wiring to the first portions 36 (e.g. ultrasonic bonding, solder paste, anisotropic conductive films, etc.). One can notice that a multilayer structure comprising the first 9 and second 27 conductive circuits and the inner layers 25 can be supplied as such by a manufacturer to another one who, then, will laminate the finishing layer 26, mill the cavities 6, 7 and insert and connect the first 3 and second 4 modules to the second conductive circuit 27.

Rather than having several components (Micro-battery, microcontroller, etc.) mounted and connected to a flexible circuit 27, one can provide similar or identical functionalities with a single integrated circuit which already comprises several electronic elements mounted on a substrate and encapsulated or overmolded in an appropriate resin. Then, a second circuit can be provided as an interconnection flexible circuit with several pads for connecting the integrated circuit, on the one hand before lamination, and bonding pads (similar to those already described above, with first and second interconnected portions) for connecting an internal wiring and one or several other module(s), on the other hand, after lamination.

It is also to be noted that the connection of one or several modules 3, 4 to the bonding pads 29 can be made with solder drop or bumps or with anisotropic conductive films, etc. For example, solder drop or bumps are made by serigraphy in order to better control their shape. Possibly, a module 3 can be connected with bonding pads 29 provided with solder bumps and another module 4 can be connected with a different technique (e.g. anisotropic conductive films). In particular, when a module has many pads to be connected (e. g. 10 or 12 solder bumps may advantageously be replaced by anisotropic conductive films).

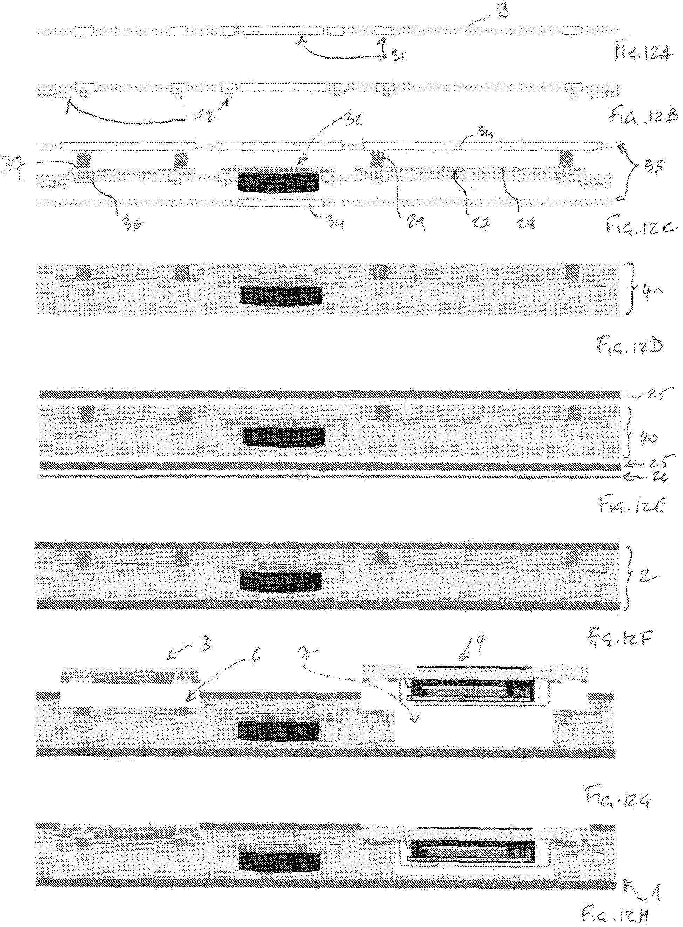

An example of method for fabricating a chip card according to the invention is shown on Figure 12.

At step A (figure 12A), an inlay core layer 9 is provided and punched at several locations for making cutouts 31.

At step B (figure 12B), a wire is embedded on the lower face of the inlay core layer 9 punched at step A. This embedded wire forms an internal circuit 12, possibly with several loops for making a coil antenna. At several locations corresponding to cutouts 31, wire ends are left un-embedded and possibly inserted in corresponding cutouts 31.

At step C (figure 12C) connection units 27, as well as an integrated circuit 32, are placed and attached to the inlay core layer 9. Compensation layers 33 with appropriate openings 34 are laminated above and below the inlay core layer 9. The connection units 27 comprise a flexible substrate 28 with bonding pads 29. Each bonding pad 29 comprises a first 36 and a second 37 electrically-interconnected portions. The first portion 36 of each bonding pad 29 is connected to an internal wiring 12. The electrical connection between the first portions 36 and the internal wiring 12 is performed by TC bonding. The second portion 37 of each bonding pad 29 comprises a solder drop or bump for connecting the conductive circuit 27 to a module 3 or 4. The first 36 and second 37 electrically-interconnected portions are respectively located on opposite sides of the conductive circuits 27 onto which they are produced. The second 37 portions are located on the upper side of the connection units 27. The first portions 36 are located on the lower side of the connection units 27. In this example, the first 36 and second 37 portions are made (for example by etching) from conductive layers respectively supported by opposite faces of a dielectric substrate (i.e. the flexible substrate 28). The thicknesses of the conductive layers used on each side of the substrate 28 for making the bonding pads 29 may be different from one another. The thickness of this substrate 28 is relatively small (e. g. about 75µm) in order to reduce the overall thickness of the chip card 1. The first 36 and second 37 portions are electrically connected, through this substrate 28, for example with plated through holes.

When several and/or large modules 3, 4 are intended to be inserted in the chip card 1, the surface of the connection units 27 compared to the chip card surface is relatively large. Further, depending on the material used as substrate 28 for connection units 27 and the material of the layers 25, 26, 33 below and/or above the connection units, card layers may not strongly adhere to one another after lamination. This can be an issue especially during the milling step. Advantageously, a layer of glue is then spread over at least a portion of one or both faces of the connection units 27.

The result of step C is shown on Figure 12D. Possibly, the multilayer structure thus achieved can be sold by a manufacturer as a prelam 40 which will be used by another manufacturer who will complete the chip card fabricating at a later stage.

At step D (Figure 12E), finishing layers are added to the prelam 40 resulting from the previous steps. The result of step D is shown on Figure 12F. The number and/or the thickness of the finishing layers 25, 26 may be varied in order to adapt to the thicknesses of the modules 3, 4, compensation layers 33 and/or connection units 27. For example, possibly, a printing may be carried out directly on a finishing layer 25 rather than adding a printed layer 26.

At step E (Figure 12G), cavities 6, 7 are milled in the card body 2 obtained from the previous steps. Possibly, hotmelt adhesive is attached to the modules 3, 4 to be fixed in the cavities 6, 7. One and/or several modules 3, 4 are double-sided modules (i. e. there is a conductive layer on both sides). In such a case, the thicknesses of the conductive layers used on each side may be different from one another. For example, the thickness on the hotmelt side may be greater. Modules 3, 4 are inserted and fixed in the cavities 6, 7 and the electrical connections between the second portions 37 of the connection units 27 and the modules 3, 4 is achieved, for example with a TC bonding technique. The result of step G is shown on Figure 12H.

Since the previous steps are advantageously carried out with a reel-to-reel process or at least with large sheets comprising several chip cards 1, chip cards 1 are cut out to individualize them. They are then ready to use.

## Claims

1. Method for fabricating a chip card, in which
- at least one top sheet (10), one bottom sheet (8) and one intermediate sheet (9) comprising a conductive circuit are provided,
- at least the top (10), bottom (8) and intermediate (9) sheets are laminated together, to form a card body (2) made of plastic material,
- a first cavity (6) is produced in the thickness of the card body (2) to place a first module (3) therein and connect it to said conductive circuit,
- at least one second cavity (7) is produced in the thickness of the card body (2), to place at least one second module (4, 24) therein, said at least one second module (4, 24) comprising an electronic component (5, 18, 22, 23, 35), and to connect this second module (4) to the conductive circuit,
**characterized in that** the intermediate sheet (9) comprises a conductive circuit comprising a first conductive circuit (12) and a second conductive circuit (27), the first conductive circuit (12) being formed as an internal wiring on a first substrate (30) and the second conductive circuit (27) comprising at least two bonding pads (29) of a conductive material laminated on a flexible second substrate (28), said bonding pads (29) comprising a first (36) and a second (37) electrically-interconnected portions, the second portion (37) of each bonding pad (29) comprising a solder drop or bump or an anisotropic conductive film, for connecting said second conductive circuit (27) to one of the modules (3, 4, 24) and the first (36) and second (37) electrically-interconnected portions being respectively located either on the same side or on opposite sides, of said second conductive circuit (27) onto which they are produced.

2. Method according to claim 1, in which said at least two bonding pads (29) of said second conductive circuit are formed on the same flexible second substrate (28) as the second circuit (27).

3. Method according to claim 1 or 2, wherein said first conductive circuit is a wire antenna (12) embedded in the first substrate (30), the method comprising connecting said at least two bonding pads (29) to the wire embedded antenna (12).

4. Method according to one of the preceding claims, in which said second conductive circuit comprising at least two bonding pads (29) is used for connecting the internal wiring (12) to the first module (3).

5. Method according to one of the preceding claims, in which said second conductive circuit comprising at least two bonding pads (29) is used for connecting the internal wiring (12) to the first module (3) and for connecting the internal wiring (12) to the second module (4, 24).

6. Method according to one of claims 1 to 4, in which the second conductive circuit comprising at least two bonding pads (29) is used for connecting the internal wiring (12) to the first module (3) and another conductive circuit comprising at least two bonding pads (29) is used for connecting the internal wiring (12) to the second module (4, 24).

7. Method according to one of the preceding claims, wherein the internal wiring (12) is formed on one side of an inlay and at least one of the first (3) and second (4, 24) modules is connected to the internal wiring (12) through cutouts made in the inlay.

8. Method according to one of the preceding claims, in which the top (10), bottom (8) and intermediate (9) sheets are laminated together, before placing a module (3, 4, 24) in one of the cavities (6, 7).

9. Method according to one of the preceding claims, in which at least one cavity (6, 7) is milled in at least one of the top (10) and bottom (8) sheets, before placing a module (3, 4, 24) in this cavity (6, 7).

10. Method according to one of claims 1 to 8, in which at least one cutout (31) is produced in one of the bottom (8) and top (10) sheets, and they are laminated with the intermediate sheet (9) to form the card body (2), then a module (3, 4, 24) is placed in a cavity corresponding to this cutout (31).

11. Method according to one of the preceding claims, in which a module (3, 4, 24) is placed on the intermediate sheet (9), a cutout (31) is produced at a location corresponding to this module (3, 4, 24), in one of the bottom (8) and top (10) sheets, then the bottom (8), top (10) and intermediate (9) sheets are laminated together to form the card body (2).

12. Method according to one of the preceding claims, in which an electrical energy power supply device (19) is provided on a module (4) and it is connected electrically to an electronic component (18, 22, 23, 35) supported by this module (4), before the module (4) which supports the electrical energy power supply device (19) and the electronic component (18, 22, 23) is placed in its cavity (7) and before this module is connected to one of the conductive circuits.

13. Method according to one of claims 1 to 11, in which an electrical energy power supply device (19) is provided on the intermediate sheet (9) and it is connected to one of the conductive circuits before the top (10), bottom (8) and intermediate (9) sheets are laminated together.

14. Chip card comprising a card body (2) made of plastic material with a first cavity (6) formed in the thickness of the card body (2) and with a first module (3, 4, 24) housed in this first cavity (6), this module (3, 4, 24) being connected to a conductive circuit inserted into the card body (2), the chip card further comprising at least one second cavity (7) formed in the thickness of the card body (2), with a second module (3, 4, 24) housed in this second cavity (7), this second module (3, 4, 24) being connected to the conductive circuit intended to be connected to one of the modules (3, 4, 24) or to both modules (3, 4, 24), **characterized in that** the conductive circuit comprises a first conductive circuit (12) and a second conductive circuit (27), the first conductive circuit (12) being formed as a wiring circuit on a first substrate (30) and said second conductive circuit (27) comprising at least two bonding pads (29) of a conductive material laminated on a flexible second substrate (28), said bonding pads (29) comprising a first (36) and a second (37) electrically-interconnected portions, the second portion (37) of each bonding pad (29) comprising a solder drop or bump or an anisotropic conductive film connecting said second conductive circuit to one of the modules (3, 4, 24) and the first (36) and second (37) electrically-interconnected portions being respectively located either on the same side or on opposite sides, of said second conductive circuit (27) onto which they are produced.

15. Card according to claim 14, wherein the first module (3) has contacts (11) flush with the surface of the card (1) and intended to establish an electrical connection with a card reader device, and the second module (4) comprises an electronic component (18, 22, 23) powered by an electrical energy power supply device (19).

16. Card according to the preceding claim, in which
- the first module (3) comprises an integrated circuit (16) electrically connected to the contacts (11) and managing at least one first function, and
- the electronic component (18, 22) of the second module (4) is connected to a microcontroller (18) making it possible to control an additional function different from a first function performed by the first module (3).

17. Card according to the preceding claim, in which the additional function is chosen from the list comprising reading biometric characteristics, short-range wireless link communication, WiFi, Bluetooth or ZigBee type wireless communication, managing card checking values, displaying data on a display device, switching on and switching off a light device.

## Patentansprüche

1. Verfahren zur Herstellung einer Chipkarte, bei dem
∘ mindestens eine obere Folie (10), eine untere Folie (8) und eine Zwischenfolie (9) mit einer Leiterschaltung bereitgestellt werden,
∘ mindestens die obere (10), untere (8) und Zwischenfolie (9) miteinander laminiert werden, um einen Kartenkörper (2) aus Kunststoffmaterial zu bilden,
∘ eine erste Ausnehmung (6) in der Dicke des Kartenkörpers (2) hergestellt wird, um ein erstes Modul (3) darin zu platzieren und es mit der Leiterschaltung zu verbinden,
∘ mindestens eine zweite Ausnehmung (7) in der Dicke des Kartenkörpers (2) hergestellt wird, um mindestens ein zweites Modul (4, 24) darin zu platzieren, wobei das mindestens eine zweite Modul (4, 24) eine elektronische Komponente (5, 18, 22, 23, 35) umfasst, und um dieses zweite Modul (4) mit der Leiterschaltung zu verbinden,
**dadurch gekennzeichnet, dass** die Zwischenfolie (9) eine Leiterschaltung umfasst, die eine erste Leiterschaltung (12) und eine zweite Leiterschaltung (27) umfasst, wobei die erste Leiterschaltung (12) als Innenverdrahtung auf einem ersten Substrat (30) ausgebildet ist und die zweite Leiterschaltung (27) mindestens zwei Anschlussflächen (29) aus einem leitfähigen Material umfasst, das auf einem flexiblen zweiten Substrat (28) laminiert ist, wobei die Anschlussflächen (29) einen ersten (36) und einen zweiten (37) elektrisch miteinander verbundenen Abschnitt umfassen, wobei der zweite Abschnitt (37) jeder Anschlussfläche (29) einen Löttropfen oder -bump oder einen anisotropen leitfähigen Film umfasst, um die zweite Leiterschaltung (27) mit einem der Module (3, 4, 24) zu verbinden, und wobei die ersten (36) und zweiten (37) elektrisch miteinander verbundenen Abschnitte jeweils entweder auf der gleichen Seite oder auf gegenüberliegenden Seiten der zweiten Leiterschaltung (27) angeordnet sind, auf der sie hergestellt werden.

2. Verfahren nach Anspruch 1, bei dem die mindestens zwei Anschlussflächen (29) der zweiten Leiterschaltung auf demselben flexiblen zweiten Substrat (28) wie die zweite Schaltung (27) ausgebildet sind.

3. Verfahren nach Anspruch 1 oder 2, wobei die erste Leiterschaltung eine in das erste Substrat (30) eingebettete Drahtantenne (12) ist, wobei das Verfahren das Verbinden der mindestens zwei Anschlussflächen (29) mit der eingebetteten Drahtantenne (12) umfasst.

4. Verfahren nach einem der vorhergehenden Ansprüche, bei dem die zweite Leiterschaltung, die mindestens zwei Anschlussflächen (29) umfasst, zum Verbinden der Innenverdrahtung (12) mit dem ersten Modul (3) verwendet wird.

5. Verfahren nach einem der vorhergehenden Ansprüche, bei dem die zweite Leiterschaltung, die mindestens zwei Anschlussflächen (29) umfasst, zum Verbinden der Innenverdrahtung (12) mit dem ersten Modul (3) und zum Verbinden der Innenverdrahtung (12) mit dem zweiten Modul (4, 24) verwendet wird.

6. Verfahren nach einem der Ansprüche 1 bis 4, bei dem die zweite Leiterschaltung, die mindestens zwei Anschlussflächen (29) umfasst, zum Verbinden der Innenverdrahtung (12) mit dem ersten Modul (3) und eine weitere Leiterschaltung, die mindestens zwei Anschlussflächen (29) umfasst, zum Verbinden der Innenverdrahtung (12) mit dem zweiten Modul (4, 24) verwendet wird.

7. Verfahren nach einem der vorhergehenden Ansprüche, wobei die Innenverdrahtung (12) auf einer Seite eines Inlays ausgebildet ist und mindestens eines der ersten (3) und zweiten (4, 24) Module mit der Innenverdrahtung (12) durch in das Inlay eingebrachte Aussparungen verbunden ist.

8. Verfahren nach einem der vorhergehenden Ansprüche, bei dem die obere (10), untere (8) und Zwischenfolie (9) miteinander laminiert werden, bevor ein Modul (3, 4, 24) in eine der Ausnehmungen (6, 7) platziert wird.

9. Verfahren nach einem der vorhergehenden Ansprüche, bei dem mindestens eine Ausnehmung (6, 7) in mindestens einer der oberen (10) und unteren (8) Folien gefräst wird, bevor ein Modul (3, 4, 24) in diese Ausnehmung (6, 7) platziert wird.

10. Verfahren nach einem der Ansprüche 1 bis 8, bei dem mindestens ein Ausschnitt (31) in einer der unteren (8) und oberen (10) Folien hergestellt wird und diese mit der Zwischenfolie (9) laminiert werden, um den Kartenkörper (2) zu bilden, dann ein Modul (3, 4, 24) in einer diesem Ausschnitt (31) entsprechenden Ausnehmung platziert wird.

11. Verfahren nach einem der vorhergehenden Ansprüche, bei dem ein Modul (3, 4, 24) auf der Zwischenfolie (9) platziert wird, ein Ausschnitt (31) an einer diesem Modul (3, 4, 24) entsprechenden Stelle in einer der unteren (8) und oberen (10) Folien hergestellt wird, dann die unteren (8), oberen (10) und Zwischenfolien (9) miteinander laminiert werden, um den Kartenkörper (2) zu bilden.

12. Verfahren nach einem der vorhergehenden Ansprüche, bei dem eine elektrische Energieversorgungs-Vorrichtung (19) auf einem Modul (4) vorgesehen ist und elektrisch mit einer elektronischen Komponente (18, 22, 23, 35) verbunden ist, die von diesem Modul (4) getragen wird, bevor das Modul (4), das die elektrische Energieversorgungs-Vorrichtung (19) und die elektronische Komponente (18, 22, 23) trägt, in seine Ausnehmung (7) platziert wird und bevor das Modul mit einer der Leiterschaltungen verbunden wird.

13. Verfahren nach einem der Ansprüche 1 bis 11, bei dem eine elektrische Energieversorgungs-Vorrichtung (19) auf der Zwischenfolie (9) vorgesehen ist und mit einer der Leiterschaltungen verbunden ist, bevor die oberen (10), unteren (8) und Zwischenfolien (9) miteinander laminiert werden.

14. Chipkarte, umfassend einen Kartenkörper (2) aus Kunststoffmaterial mit einer ersten Ausnehmung (6), die in der Dicke des Kartenkörpers (2) ausgebildet ist, und mit einem ersten Modul (3, 4, 24), das in dieser ersten Ausnehmung (6) untergebracht ist, wobei dieses Modul (3, 4, 24) mit einer in den Kartenkörper (2) eingesetzten Leiterschaltung verbunden ist, wobei die Chipkarte ferner mindestens eine zweite Ausnehmung (7) umfasst, die in der Dicke des Kartenkörpers (2) ausgebildet ist, mit einem zweiten Modul (3, 4, 24), das in dieser zweiten Ausnehmung (7) untergebracht ist, wobei dieses zweite Modul (3, 4, 24) mit der Leiterschaltung verbunden ist, die dazu bestimmt ist, mit einem der Module (3, 4, 24) oder mit beiden Modulen (3, 4, 24) verbunden zu werden,
**dadurch gekennzeichnet, dass** die Leiterschaltung eine erste Leiterschaltung (12) und eine zweite Leiterschaltung (27) umfasst, wobei die erste Leiterschaltung (12) als Leiterschaltung auf einem ersten Substrat (30) ausgebildet ist und die zweite Leiterschaltung (27) mindestens zwei Anschlussflächen (29) aus einem leitfähigen Material umfasst, das auf einem flexiblen zweiten Substrat (28) laminiert ist, wobei die Anschlussflächen (29) einen ersten (36) und einen zweiten (37) elektrisch miteinander verbundenen Abschnitt umfassen, wobei der zweite Abschnitt (37) jeder Anschlussfläche (29) einen Löttropfen oder -bump oder einen anisotropen leitfähigen Film umfasst, der die zweite Leiterschaltung mit einem der Module (3, 4, 24) verbindet, und wobei die ersten (36) und zweiten (37) elektrisch miteinander verbundenen Abschnitte jeweils entweder auf der gleichen Seite oder auf gegenüberliegenden Seiten der zweiten Leiterschaltung (27) angeordnet sind, auf der sie hergestellt werden.

15. Karte nach Anspruch 14, bei der das erste Modul (3) Kontakte (11) aufweist, die bündig mit der Oberfläche der Karte (1) abschließen und dazu bestimmt sind, eine elektrische Verbindung mit einem Kartenlesegerät herzustellen, und das zweite Modul (4) eine elektronische Komponente (18, 22, 23) umfasst, die von einer elektrischen Energieversorgungs-Vorrichtung (19) versorgt wird.

16. Karte nach dem vorhergehenden Anspruch, bei der
∘ das erste Modul (3) eine integrierte Schaltung (16) umfasst, die elektrisch mit den Kontakten (11) verbunden ist und mindestens eine erste Funktion verwaltet, und
∘ die elektronische Komponente (18, 22) des zweiten Moduls (4) mit einem Mikrocontroller (18) verbunden ist, der es ermöglicht, eine zusätzliche Funktion zu steuern, die sich von einer ersten Funktion unterscheidet, die vom ersten Modul (3) ausgeführt wird.

17. Karte nach dem vorhergehenden Anspruch, bei der die zusätzliche Funktion aus der Liste ausgewählt ist, die das Lesen biometrischer Merkmale, die Drahtlos-Kurzstreckenkommunikation, die Drahtloskommunikation vom Typ WiFi, Bluetooth oder ZigBee, die Verwaltung von Kartenprüfwerten, die Anzeige von Daten auf einer Anzeigevorrichtung, das Ein- und Ausschalten einer Lichtvorrichtung umfasst.

## Revendications

1. Procédé de fabrication d'une carte à puce, dans lequel
- au moins une feuille supérieure (10), une feuille inférieure (8) et une feuille intermédiaire (9) comprenant un circuit conducteur sont fournies,
- au moins les feuilles supérieure (10), inférieure (8) et intermédiaire (9) sont laminées ensemble, pour former un corps de carte (2) en matière plastique,
- une première cavité (6) est produite dans l'épaisseur du corps de carte (2) pour y placer un premier module (3) et le connecter audit circuit conducteur,
- au moins une seconde cavité (7) est produite dans l'épaisseur du corps de carte (2), pour y placer au moins un second module (4, 24), ledit au moins un second module (4, 24) comprenant un composant électronique (5, 18, 22, 23, 35), et pour connecter ce second module (4) au circuit conducteur,
**caractérisé en ce que** la feuille intermédiaire (9) comprend un circuit conducteur comprenant un premier circuit conducteur (12) et un second circuit conducteur (27), le premier circuit conducteur (12) étant formé comme un câblage interne sur un premier substrat (30) et le second circuit conducteur (27) comprenant au moins deux plages de connexion (29) d'un matériau conducteur laminé sur un second substrat flexible (28), lesdites plages de connexion (29) comprenant une première (36) et une seconde (37) partie interconnectées électriquement, la seconde partie (37) de chaque plage de connexion (29) comprenant une goutte de soudure ou une bosse ou un film conducteur anisotropique, pour connecter ledit second circuit conducteur (27) à l'un des modules (3, 4, 24) et les première (36) et seconde (37) parties interconnectées électriquement étant respectivement situées soit du même côté, soit de côtés opposés, dudit second circuit conducteur (27) sur lequel elles sont produites.

2. Procédé selon la revendication 1, dans lequel lesdites au moins deux plages de connexion (29) dudit second circuit conducteur sont formées sur le même second substrat flexible (28) que le second circuit (27).

3. Procédé selon la revendication 1 ou 2, dans lequel ledit premier circuit conducteur est une antenne filaire (12) noyée dans le premier substrat (30), le procédé comprenant la connexion desdites au moins deux plages de connexion (29) à l'antenne filaire noyée (12).

4. Procédé selon l'une des revendications précédentes, dans lequel ledit second circuit conducteur comprenant au moins deux plages de connexion (29) est utilisé pour connecter le câblage interne (12) au premier module (3).

5. Procédé selon l'une des revendications précédentes, dans lequel ledit second circuit conducteur comprenant au moins deux plages de connexion (29) est utilisé pour connecter le câblage interne (12) au premier module (3) et pour connecter le câblage interne (12) au second module (4, 24).

6. Procédé selon l'une des revendications 1 à 4, dans lequel le second circuit conducteur comprenant au moins deux plages de connexion (29) est utilisé pour connecter le câblage interne (12) au premier module (3) et un autre circuit conducteur comprenant au moins deux plages de connexion (29) est utilisé pour connecter le câblage interne (12) au second module (4, 24).

7. Procédé selon l'une des revendications précédentes, dans lequel le câblage interne (12) est formé sur une face d'une incrustation et au moins l'un des premier (3) et second (4, 24) modules est connecté au câblage interne (12) par des découpes réalisées dans l'incrustation.

8. Procédé selon l'une des revendications précédentes, dans lequel les feuilles supérieure (10), inférieure (8) et intermédiaire (9) sont laminées ensemble, avant de placer un module (3, 4, 24) dans l'une des cavités (6, 7).

9. Procédé selon l'une des revendications précédentes, dans lequel au moins une cavité (6, 7) est usinée dans au moins l'une des feuilles supérieure (10) et inférieure (8), avant de placer un module (3, 4, 24) dans cette cavité (6, 7).

10. Procédé selon l'une des revendications 1 à 8, dans lequel au moins une découpe (31) est produite dans l'une des feuilles inférieure (8) et supérieure (10), et elles sont laminées avec la feuille intermédiaire (9) pour former le corps de carte (2), puis un module (3, 4, 24) est placé dans une cavité correspondant à cette découpe (31).

11. Procédé selon l'une des revendications précédentes, dans lequel un module (3, 4, 24) est placé sur la feuille intermédiaire (9), une découpe (31) est produite à un emplacement correspondant à ce module (3, 4, 24), dans l'une des feuilles inférieure (8) et supérieure (10), puis les feuilles inférieure (8), supérieure (10) et intermédiaire (9) sont laminées ensemble pour former le corps de carte (2).

12. Procédé selon l'une des revendications précédentes, dans lequel un dispositif d'alimentation en énergie électrique (19) est prévu sur un module (4) et est connecté électriquement à un composant électronique (18, 22, 23, 35) supporté par ce module (4), avant que le module (4) qui supporte le dispositif d'alimentation en énergie électrique (19) et le composant électronique (18, 22, 23) ne soit placé dans sa cavité (7) et avant que ce module ne soit connecté à l'un des circuits conducteurs.

13. Procédé selon l'une des revendications 1 à 11, dans lequel un dispositif d'alimentation en énergie électrique (19) est prévu sur la feuille intermédiaire (9) et est connecté à l'un des circuits conducteurs avant que les feuilles supérieure (10), inférieure (8) et intermédiaire (9) ne soient laminées ensemble.

14. Carte à puce comprenant un corps de carte (2) en matière plastique avec une première cavité (6) formée dans l'épaisseur du corps de carte (2) et avec un premier module (3, 4, 24) logé dans cette première cavité (6), ce module (3, 4, 24) étant connecté à un circuit conducteur inséré dans le corps de carte (2),
la carte à puce comprenant en outre au moins une seconde cavité (7) formée dans l'épaisseur du corps de carte (2), avec un second module (3, 4, 24) logé dans cette seconde cavité (7), ce second module (3, 4, 24) étant connecté au circuit conducteur destiné à être connecté à l'un des modules (3, 4, 24) ou aux deux modules (3, 4, 24),
**caractérisée en ce que** le circuit conducteur comprend un premier circuit conducteur (12) et un second circuit conducteur (27), le premier circuit conducteur (12) étant formé comme un circuit de câblage sur un premier substrat (30) et ledit second circuit conducteur (27) comprenant au moins deux plages de connexion (29) d'un matériau conducteur laminé sur un second substrat flexible (28), lesdites plages de connexion (29) comprenant une première (36) et une seconde (37) partie interconnectées électriquement, la seconde partie (37) de chaque plage de connexion (29) comprenant une goutte de soudure ou une bosse ou un film conducteur anisotropique connectant ledit second circuit conducteur à l'un des modules (3, 4, 24) et les première (36) et seconde (37) parties interconnectées électriquement étant respectivement situées soit du même côté, soit de côtés opposés, dudit second circuit conducteur (27) sur lequel elles sont produites.

15. Carte selon la revendication 14, dans laquelle le premier module (3) comporte des contacts (11) affleurant la surface de la carte (1) et destinés à établir une connexion électrique avec un dispositif de lecture de carte, et le second module (4) comprend un composant électronique (18, 22, 23) alimenté par un dispositif d'alimentation en énergie électrique (19).

16. Carte selon la revendication précédente, dans laquelle
- le premier module (3) comprend un circuit intégré (16) connecté électriquement aux contacts (11) et gérant au moins une première fonction, et
- le composant électronique (18, 22) du second module (4) est connecté à un microcontrôleur (18) permettant de contrôler une fonction additionnelle différente d'une première fonction réalisée par le premier module (3).

17. Carte selon la revendication précédente, dans laquelle la fonction additionnelle est choisie dans la liste comprenant la lecture de caractéristiques biométriques, la communication sans fil à courte portée, la communication sans fil de type WiFi, Bluetooth ou Zigßee, la gestion de valeurs de vérification de carte, l'affichage de données sur un dispositif d'affichage, l'allumage et l'extinction d'un dispositif lumineux.
